# EUROPEAN PATENT APPLICATION

(11) **EP 2 037 259 A1**
(43) Date of publication of application: **18.03.2009**
(21) Application number: 07767688.0
(22) Date of filing: 27.06.2007
(51) Int. Cl.: G01N 27/416

(54) **ELECTROCHEMICAL CELL SYSTEM GAS SENSOR**

(30) Priority: 30.06.2006 JP 2006182817
(71) Applicant: National Institute of Advanced Industrial Science and Technology, Tokyo 100-8921 (JP); Bosch Corporation, Shibuya-ku Tokyo 150-8360 (JP)
(72) Inventor: HAMAMOTO, Koichi, Nagoya-shi, Aichi 4638560 (JP); FUJISHIRO, Yoshinobu, Nagoya-shi, Aichi 4638560 (JP); AWANO, Masanobu, Nagoya-shi, Aichi 4638560 (JP); KASUKAWA, Kazuhisa, Tokyo 1508360 (JP); KASAYA, Masashi, Tokyo 1508360 (JP); KOBAYASHI, Takashi, Tokyo 1508360 (JP)
(74) Representative: Galloway, Peter David
(86) International application number: PCT/JP2007/062886
(87) International publication number: WO 2008/001806

(57) **Abstract**

The present invention is an electrochemical cell system gas sensor that detects a subject substance to be detected using an electrochemical reaction system and comprises an ion conduction phase and at least two kinds of electrode facing each other and contacting the ion conduction phase, an electrode structure thereof comprising a chemical detection electrode layer having a selective adsorption characteristic relative to the subject substance to be detected and at least one reference electrode layer serving as a counter electrode to the chemical detection electrode layer, a manufacturing method thereof, and a method of detecting the subject substance to be detected, the present invention provides a chemical detection system having an extremely high response speed and great detection ability irrespective of high or low temperatures and even in the presence of excessive oxygen that impairs the chemical reaction of the subject substance to be detected.

## Description

### TECHNICAL FIELD

The present invention relates to a chemical sensor, and more particularly to a chemical sensor capable of detecting nitrogen oxide in burned exhaust gas containing oxygen with a high degree of sensitivity, at high speed, and quantitatively. The present invention provides a novel chemical sensor which, when detecting nitrogen oxide in exhaust gas, can detect the nitrogen oxide serving as a detection subject substance with an extremely high degree of sensitivity, at high speed, and quantitatively, even under conditions of oxygen molecule coexistence, by selectively adsorbing the nitrogen oxide onto a surface using an ion conduction mechanism having essentially low reactivity or responsiveness.

### BACKGROUND

Improving purification efficiency in relation to environmental pollutants such as automobile exhaust gas has become a great social issue both nationally and internationally, and environmental discharge standards are becoming stricter by the year. Improvements in engine combustion and post-treatment techniques have been taken up as the principle countermeasures to this issue.

For example, demands have been made for appropriate catalyst operations using an ultra-lean burn combustion system or the like, represented by a direct injection engine, but there is also a pressing need for development of a high-performance chemical sensor that can monitor the nitrogen oxide concentration of the exhaust gas and the nitrogen oxide concentration following passage through the catalyst accurately at all times.

Hence, semiconductor sensors, mixed potential type/electrolytic current type zirconia sensors, and so on, for example, have been developed, but these sensors exhibit problems such as a slow response time, poor detection sensitivity and quantitativeness, an insufficient temperature characteristic, and instability in the detection of nitrogen oxide and responsiveness caused by a coexistent gas such as hydrocarbon or carbon dioxide and variation in the abundance ratio of water vapor.

In a sensor using a solid electrolyte, a method of detecting nitrogen oxide using an oxygen ion conduction characteristic is employed, but since ion conduction is slower than electron conduction, responsiveness becomes a particularly large problem.

If nitrogen oxide contained in exhaust gas could be detected directly, the problems described above could be solved and a dramatic improvement in sensor performance could be expected. The present inventors have advanced the development of an electrochemical cell system highly selective reactor with the aim of improving the selective purification performance in relation to nitrogen oxide contained in exhaust gas.

Currently, nitrogen oxide generated by a conventional gasoline engine is principally purified by a three-way catalyst. However, in high-performance engines capable of improving fuel efficiency, such as lean burn engines and diesel engines, excessive oxygen is present in the burned exhaust gas, leading to a dramatic reduction in catalyst activity due to adsorption of the oxygen onto the surface of the three-way catalyst, and as a result, the nitrogen oxide cannot be purified.

Meanwhile, nitrogen oxide is also removed from exhaust gas by introducing a current into a solid electrolytic membrane having an oxygen ion conduction property. A system for simultaneously removing surface oxygen and decomposing the nitrogen oxide into oxygen and nitrogen by applying a voltage to a solid electrolyte sandwiched between two surfaces of a metal electrode has been proposed as a catalytic reactor.

With this method, however, when excessive oxygen is present in the burned exhaust gas, the adsorption, decomposition, and reaction sites of the coexistent oxygen and nitrogen oxide are located in an identical oxygen defect, and therefore the adsorption probability of the nitrogen oxide relative to the oxygen molecules is extremely low in terms of molecule selectivity and a coexistent molecule number ratio. Therefore, to decompose the nitrogen oxide, a large current is required, leading to an increase in power consumption.

Meanwhile, in a chemical reactor, a structure in which an electron conductor and an ion conductor having a size ranging from nanometers to micrometers or smaller are distributed in network form around a nanometer-sized through hole on the upper portion of the layer thereof so as to be in close contact with each other is provided as an internal structure of a cathode. Thus, excessive oxygen, which impairs a chemical reaction performed on a treatment subject substance, is reduced, and as a result, the treatment subject substance can be treated with a high degree of efficiency and low power consumption.

Further, it has been found that by forming a local reaction site in an operation electrode layer positioned on the upper portion of a cathode in a chemical reaction portion so that oxygen adsorption and a nitrogen oxide adsorption-reduction reaction are performed simultaneously, thereby enabling an improvement in the efficiency of the chemical reaction, oxygen molecules can be ionized and removed, whereby the reactor is reactivated, by electrifying the chemical reaction system following the adsorption of a fixed amount of oxygen molecules.

Furthermore, it has been found that by establishing both selective nitrogen oxide molecule adsorption onto the surface of a nanometer-scale transition metal particle and selective oxygen molecule adsorption onto an oxygen deficiency in an oxide that is adjacent to the transition metal via a nanometer-scale space, the adsorption sites of the nitrogen oxide molecules and the oxygen molecules are separated, enabling progress in efficient adsorption, decomposition, and purification of the nitrogen oxide molecules (Patent Documents 1 to 9).

Patent Document 1: Japanese Patent Publication No. 3,626,971
Patent Document 2: Japanese Patent Publication No. 3,657,542
Patent Document 3: Japanese Laid-Open Patent Publication No. 2003-265926
Patent Document 4: Japanese Laid-Open Patent Publication No. 2003-265950
Patent Document 5: Japanese Laid-Open Patent Publication No. 2004-041965
Patent Document 6: Japanese Laid-Open Patent Publication No. 2004-041975
Patent Document 7: Japanese Laid-Open Patent Publication No. 2004-058028
Patent Document 8: Japanese Laid-Open Patent Publication No. 2004-058029
Patent Document 9: Japanese Laid-Open Patent Publication No. 2006-007142

### DISCLOSURE OF THE INVENTION

In light of the circumstances described above, the present inventors have conducted committed research in consideration of the related art described above with the aim of developing a novel detection system that can detect nitrogen oxide in exhaust gas directly, and as a result of this research, the present inventors have found that by using the molecule-level substance selective adsorption property of the chemical reaction system described above, characteristics such as high sensitivity and high-speed responsiveness can be applied in relation to a minute detection subject substance, and therefore that this chemical reaction system could be put to practical use as a chemical sensor serving as an embodiment of an electrochemical reaction system. Thus, the present inventors arrived at the invention of the present application. An object of the present invention is to provide an electrochemical cell system nitrogen oxide detection chemical sensor.

To achieve the object described above, the present invention is constituted by the following technical means.
(1) An electrochemical system chemical sensor, which detects a subject substance to be detected using an electrochemical reaction system, comprising an ion conduction phase and at least two kinds of electrode facing each other and contacting said ion conduction phase, characterized in that the electrode structure comprises at least one chemical detection electrode layer having a selective adsorption characteristic relative to said subject substance to be detected, and at least one reference electrode layer serving as a counter electrode to said chemical detection electrode layer.
(2) The chemical sensor according to above (1), wherein said chemical detection electrode layer is constituted by a mixed conductive substance having both electron conductivity and ion conductivity, or a mixture of an electron conductive substance and an ion conductive substance.
(3) The chemical sensor according to above (1), wherein said reference electrode layer is constituted by a mixed conductive substance having both electron conductivity and ion conductivity, or a mixture of an electron conductive substance and an ion conductive substance.
(4) The chemical sensor according to above (1), wherein said ion conduction phase is constituted by a solid electrolyte having ion conductivity.
(5) The chemical sensor according to above (1), wherein a coating layer having low electron conductivity is provided on a surface of said chemical detection electrode layer.
(6) The chemical sensor according to above (2), wherein an internal electrode structure includes a nanometer-sized or micrometer-sized void, and a part thereof having said selective adsorption characteristic relative to said subject substance to be detected faces said void.
(7) The chemical sensor according to above (6), characterized in that said part having said selective adsorption characteristic includes a transition metal element.
(8) The chemical sensor according to above (2), wherein a microstructure for promoting selective detection of said subject substance to be detected is formed in said chemical detection electrode layer by performing reduction or oxidation or both through heat treatment and/or electrification treatment.
(9) The chemical sensor according to above (2), wherein said ion conductor and said electron conductor respectively have a network structure in said electrode interior.
(10) The chemical sensor according to above (2), wherein said reference electrode layer is embedded in said ion conduction phase.
(11) An electrochemical system chemical sensor characterized in having an equivalent constitution to that of the electrochemical reaction system of the chemical sensor defined in any of above (1) to (10) as a local interior structure such that instead of having an electrochemical sensor structure as a whole, the electrochemical system chemical sensor has a microstructure that is formed by reduction or oxidation or both in said local structure and has a nanometer-sized or micrometer-sized void enabling selective detection of a subject substance to be detected.
(12) A manufacturing method for the chemical sensor having the electrochemical reaction system defined in any of claims 1 to 11, characterized in comprising:
   constructing an electrochemical reaction system having a structure that includes an ion conduction phase and at least two kinds of electrode facing each other and contacting said ion conduction phase;
   forming an electrode layer having as an electrode a mixed conductive substance having both electron conductivity and ion conductivity or a mixture of an electron conductive substance and an ion conductive substance; and
   generating a microstructure having a nanometer-sized or micrometer-sized void enabling selective detection of a subject substance to be detected by performing heat treatment and/or electrification treatment on said electrode layer such that reduction, oxidation, or both are performed on said electrode.
(13) The manufacturing method for a chemical sensor according to above (12), wherein said microstructure enabling selective detection of said detection subject substance is generated by applying a material that can be sintered at a low temperature to said electrode instead of a precious metal, whereby the entire manufacturing process can be performed at 1200°C or lower.
(14) A detection method for detecting a subject substance to be detected using the chemical sensor defined in any of above (1) to (12), characterized in that a continuous selective detection reaction is generated in the presence of a high concentration (2% or more) of a coexistent substance that impairs selective detection of said detection subject substance.
(15) The detection method according to above (14), wherein said subject substance to be detected is nitrogen oxide or oxygen, and said coexistent substance is oxygen, carbon monoxide, carbon dioxide, water vapor, or hydrocarbon.

Next, the present invention will be described in further detail.
A chemical detection system according to the present invention, which detects a subject substance to be detected such as nitrogen oxide in exhaust gas, is ion conductive, and is constituted by a chemical detection electrode layer for advancing detection of the detected substance, one or more reference electrode layers opposing the chemical detection electrode layer, and preferably a coating layer for promoting structural organization of the chemical detection electrode layer.

The chemical detection electrode layer is preferably constituted by a material having a high selective adsorption characteristic relative to the subject substance to be detected, whereas the reference electrode layer is preferably constituted by a material having a lower adsorption characteristic relative to the subject substance to be detected or a substance that coexists with the subject substance to be detected than the chemical detection electrode layer.

When the chemical detection system is used as a current value detection sensor, an ion is generated in the chemical detection electrode layer by supplying an electron to an element contained in the subject substance to be detected, and the generated ion is transmitted to an ion conduction phase. Hence, the chemical detection electrode layer is preferably constituted by a conductive substance. Further, to promote electron and ion transmission, the chemical detection electrode layer is preferably constituted by a mixed conductive substance having both electron conductivity and ion conductivity or a mixture of an electron conductive substance and an ion conductive substance. The chemical detection electrode layer may be structured such that at least two layers of these materials are laminated.

When the chemical detection system is used as a potential detection sensor, the chemical detection electrode layer preferably has a highly gas-permeable structure in which adsorption and separation to and from an element contained in the subject substance to be detected can be performed quickly, thereby increasing the response speed.

Further, when the chemical detection system is used as a potential detection sensor, a unique carrier concentration of the ion conductive material can be referenced directly by disposing the reference electrode layer so as to be embedded in the interior of the ion conductive material (solid electrolyte). Typically, when a reference electrode is formed in a sensor, the reference electrode surface must be exposed to a reference gas atmosphere outside of the detection gas atmosphere, and as a result, the sensor structure becomes complicated, but by embedding the reference electrode layer in the interior of the ion conductive material (solid electrolyte), a stable, single-chamber sensor can be developed without considering a reference atmosphere. Hence, a device exhibiting a stable sensor characteristic in spite of its simple structure can be manufactured.

Further, by embedding the reference electrode layer in the interior of the ion conductive material (solid electrolyte), deterioration of the reference electrode and so on can be avoided. Note, however, that when the reference electrode layer is embedded in the interior of the ion conductive material (solid electrolyte), a material that does not generate an intermediate layer on the boundary between the ion conductive material and the reference electrode during firing in the manufacturing process is preferably selected.

There are no particular limitations on the conductive substance and ion conductive substance used as the chemical detection electrode layer. As the conductive substance, a precious metal such as platinum or palladium, or a metal oxide such as nickel oxide, cobalt oxide, copper oxide, lanthanum manganite, lanthanum cobaltite, and lanthanum chromite may be used. A barium-containing oxide, zeolite, and so on for adsorbing the subject substance to be detected selectively may be used as a reduction phase. A mixed substance containing at least one of the aforementioned substances and at least one type of ion conductive substance is preferably used.

As the ion conductive substance, zirconia stabilized by yttria or scandium oxide, ceria stabilized by gadolinium oxide or samarium oxide, lanthanum gallate, and so on may be used. The chemical detection electrode layer preferably has a structure in which at least two layers of the aforementioned substances are laminated. A structure in which two layers of a mixture phase containing nickel oxide and zirconia stabilized by yttria or scandium oxide are laminated may be used as a favorable combination.

More preferably, a bismuth oxide is used as the ion conductor. A bismuth oxide-based ion conductor exhibits the highest level of conductivity among all ceramic materials, and therefore, by applying this material partially or entirely, an improvement in ion conductivity can be achieved such that particularly in the case of a current value detection sensor, large improvements in low-temperature operability and response speed are obtained.

The ion conduction phase is constituted by a solid electrolyte having ion conductivity, and preferably by a solid electrolyte having oxygen ion conductivity. Examples of a solid electrolyte having oxygen ion conductivity include zirconia stabilized by yttria or scandium oxide, ceria stabilized by gadolinium oxide or samarium oxide, and lanthanum gallate, but there are no particular limitations thereon. Zirconia stabilized by yttria or scandium oxide, which is highly conductive, strong, and exhibits superior long-term stability, is preferably used. Alternatively, a ceria-based solid electrolyte is preferably used for applications in which the purpose of use can be achieved by a comparatively short operation.

More preferably, the aforementioned bismuth oxide-based ion conductor is used to achieve a large improvement in ion conductivity such that a sufficient ion conduction characteristic is obtained even at a system operation temperature of 400°C or lower. The sintering temperature, fusion temperature, and ion conductivity vary according to the types and amounts of additives to the bismuth oxide, and therefore composition ratios are determined according to combinations with materials constituting other parts. Furthermore, the effects on the conductivity of chemical reactions between the bismuth oxide and the other materials must be taken into account.

By making it possible to subject one or more of the materials constituting the chemical detection electrode layer to electrochemical reduction or oxidation, for example by making it possible to generate nanometer-sized metal particles through reduction of a metal oxide or to generate nanometer-sized metal oxide particles through oxidation of a metal, the structural organization, such as the number of nanometer-sized particles exhibiting favorable permeability and adsorbability characteristics relative to the detected substance, can be controlled by means of a reduction or oxidation reaction, and therefore sensitivity control can be performed favorably in accordance with variation in the adsorption surface area of the detected substance.

By simultaneously controlling the reduction or oxidation reaction amount of the constitutional material in an electrification process, a heat treatment process, or both, the magnitude of nanometer-sized holes in the chemical detection electrode layer can be varied in accordance with the molecule size of the subject substance to be detected such that a reaction site in which only a specific detected substance corresponding to the hole diameter can penetrate and diffuse is formed in the chemical detection electrode layer. Thus, a selective substance detection function can be realized favorably. In other words, with the present invention, the internal structure of the chemical detection electrode layer can be controlled by electrification, and as a result, a pore diameter and an adsorption site that correspond to the subject substance to be detected can be formed.

A combination of an ion conduction phase and an electron conduction phase, a mixed conduction phase, or a combination of the mixed conduction phase with an ion conduction phase and an electron conduction phase may be used as the substances constituting this structure. When the subject substance to be detected is nitrogen oxide, a combination of a transition metal phase formed from nickel or the like and an oxygen ion conductor is preferably used as the chemical detection electrode layer since the surface of the nanometer-sized nickel particles adsorbs covalent molecules with a high degree of selectivity.

The reference electrode layer discharges electrons from the ions of the ion conduction phase, and therefore contains a conductive substance. To promote electron and ion transmission, the reference electrode layer is preferably constituted by a mixed conductive substance having both electron conductivity and ion conductivity or a mixture that contains both an electron conductive substance and an ion conductive substance and does not form an intermediate layer when it reacts with the ion conduction phase or the like during firing. There are no particular limitations on the conductive substance and ion conductive substance used in the reference electrode layer. As the conductive substance, a precious metal such as platinum or palladium, or a metal oxide such as nickel oxide, cobalt oxide, copper oxide, lanthanum manganite, lanthanum cobaltite, and lanthanum chromite may be used. As the ion conductive substance, zirconia stabilized by yttria or scandium oxide, ceria stabilized by gadolinium oxide or samarium oxide, or lanthanum gallate may be used.

The coating layer is used to prevent the supply of an electron required to generate an oxygen ion when an oxygen molecule is adsorbed onto the surface of the chemical detection electrode layer and to promote the oxidation reduction reaction in the chemical detection electrode layer. For example, the coating layer is provided for preventing re-oxidation of nickel metal generated by the reduction reaction performed in relation to the nickel oxide in the case such that nickel oxide is used as the conductive oxide of the chemical detection electrode layer, and has the material and structure of preventing an electron supplied by the electron conductive material from reaching the surface of the electrode layer for chemical detection. Any material other than a material having high electron conductivity may be used, but in the case of a mixed conductor, the electron conduction suppression effect is reduced if the electron conductivity is high, and therefore the electron conductivity ratio of the material is preferably as small as possible.

Further, when a material such as an adsorption catalyst, which has a favorable adsorption characteristic relative to a coexistent substance other than the subject substance to be detected, is used in the coating layer, an improvement in the detection sensitivity of the subject substance to be detected can be expected due to a pseudo molecule sieving effect in the upper portion of the chemical detection electrode. However, when the thickness of the covered later is excessive, diffusion resistance also increases, and therefore the thickness and density of the coating layer must be determined in accordance with the desired detection characteristic.

When nitrogen oxide is the subject substance to be detected in an actual environment in which exhaust gas containing the subject substance to be detected or the like is the subject, for example, oxygen, carbon monoxide, carbon dioxide, hydrocarbon, sulfur oxide, water vapor, and so on are usually included as coexistent substances, and therefore a durable material or a coating layer is preferably employed so that selectivity in relation to a specific molecule on the chemical detection electrode layer is realized while preventing deterioration of the material.

To detect a plurality of elements simultaneously or to detect a single element within a coexistent substance with a high degree of precision, three or more electrode layers are preferably disposed on an electrolyte surface and a potential difference is observed in composite. Moreover, electrode materials having different adsorption/reaction characteristics corresponding to the subject substance to be detected are preferably selected.

In the present invention, the electrochemical cell system chemical sensor described above may be used as an electromotive force variation detection sensor or a current value variation detection sensor by being disposed in a subject gas to be detected to measure electromotive force variation or current value variation (resistance variation). In this case, a chemical detection system may be constructed by attaching lead wires to the chemical detection electrode layer and reference electrode layer of the chemical sensor described above, and a chemical sensor device can be constituted by providing a detection system for detecting electromotive force variation or current value variation caused by variation in the concentration of the subject gas to be detected.

In this case, platinum may be cited as an example of the aforementioned lead wires, a voltmeter or a source meter may be cited as an example of means for detecting electromotive force variation, and an ammeter may be cited as an example of means for detecting current value variation. However, the present invention is not limited thereto, and the specific constitutions of these components may be designed as desired in accordance with the purpose of use, manner of use, size, type, manner of arrangement, and so on of the chemical sensor.

When the present invention is used as a current value detecting type sensor, a current is introduced into the chemical sensor such that an oxidation reduction reaction occurs continuously on the electrode layer for chemical detection. Thus, the nitrogen oxide in the subject substance to be detected is reduced on the electrode layer for chemical detection of the chemical sensor upon reception of an electron supply, thereby generating oxygen ions. The generated oxygen ions are transmitted to the ion conduction phase, supplied to the reference electrode layer, and discharged from the reference electrode layer as electrons at the same time as oxygen molecules. By measuring this discharge using appropriate measuring means, variation in the nitrogen oxide concentration of the subject substance to be detected can be measured quantitatively.

On the electrode layer for chemical detection of the current value detecting type sensor according to the present invention, by forming a large number of chemical reaction portions having (1) a nitrogen oxide preferential adsorption/reduction reaction phase constituted by reduction microparticles formed from a transition metal oxide or the like, (2) a space for introducing the subject substance to be detected to the reaction site, (3) an ion conduction phase serving as a path for transporting oxygen ionized by the nitrogen oxide adsorption/reduction reaction to the exterior of the reaction system, and (4) an electron conduction phase for supplying electrons required to ionize the nitrogen oxide molecules as "basic units" separately to an oxygen deficiency concentration portion of the ion conduction layer, which performs preferential adsorption and decomposition on the oxygen molecules and is located adjacent to the metal, a system in which the subject substance to be detected is adsorbed and decomposed selectively relative to coexistent oxygen molecules can be constructed.

The aforementioned "basic units" are constituted by four elements, namely (1) a microparticle structure formed from a transition metal or the like that serves as a reaction site for the N of an NO molecule, (2) a nano-space for introducing the subject substance to be detected into the reaction site (and simultaneously, a nano-space for restricting the subject substance to be detected to the reaction site and increasing the contact probability thereof), (3) an ion conduction phase serving as a path for transporting oxygen molecules ionized by the oxygen deficiency in the ion conduction phase to the exterior of the reaction system, and (4) an electron conduction phase for supplying electrons required to ionize the nitrogen oxide adsorbed to the transition metal surface.

In above (1), the reason for using a transition metal or the like is that the surface of a transition metal has a selective nitrogen oxide adsorption property relative to oxygen molecules, in contrast to molecules being covalent. Further, the reason for providing a microparticle structure is that an improvement in adsorption reaction efficiency can be achieved by increasing the surface area.

In above (2), a nano-space contacting the reduction phase is required because the effective space for generating an adsorption reaction quickly in the NO molecule, for example, is preferably small from the viewpoint of contact probability. However, to increase the reaction speed of the sensor, a space that is large enough for the subject substance to be detected to reach the reaction site quickly is required.

To satisfy these contradictory demands, a nanometer-scale space having an inclined pore diameter is required, and preferable examples of this space include a space having a hole that becomes narrower from the outside toward the inside and a space that is parallel to a flow path direction of the exhaust gas or the like, for example a unidirectional through hole. Thus, the subject substance to be detected can be introduced into and diffused through the nanometer-scale space, and selectively adsorbed onto the surface of the transition metal microparticles quickly, thereby advancing the reduction reaction of the nitrogen oxide.

In the current value detecting type chemical sensor described above, when the subject substance to be detected is nitrogen oxide in burned exhaust gas, for example, the nitrogen oxide is reduced to generate an oxygen ion in the reduction phase, and the oxygen ion is conducted in the ion conduction phase. The reduction phase is preferably formed from a porous substance that adsorbs the subject substance to be detected serving as the reaction subject selectively. The reduction phase contacts the electron conductor or is close to the nanometer-scale space. Further, the reduction phase contacting the ion conductor has a volume that occupies all or a part of the reduction phase part extending to a separate ion conductor.

The chemical reaction portion having the above constitution is structured to be capable not only of adsorbing and decomposing the subject substance to be detected with a high degree of efficiency, but also adsorbing oxygen molecules and adsorbing and decomposing the subject substance to be detected at the same time using separate substances suitable for the respective reactions. More specifically, the surface area of the transition metal microparticles included originally or generated by reducing the oxide that adsorbs the nitrogen oxide preferentially, which is slightly greater than the surface area of the oxygen deficiency concentration portion of the ion conductor adjacent to the metal that adsorbs the oxygen molecules preferentially, coexists with a peripheral minute space of approximately several to several hundred nm, and therefore the subject substance to be detected and the oxygen molecules are both selectively adsorbed, leading to an improvement in the detection sensitivity of the sensor.

The microstructure of the chemical reaction portion is formed by performing electrification treatment or heat treatment in a reduction atmosphere or the like on the chemical reaction portion in addition to a heat treatment process (zirconia-nickel oxide, ambient heat treatment at 1400 to 1450°C). More specifically, using an oxide that is reduced comparatively easily, for example, electrification is performed in a high temperature of at least several hundred degrees centigrade to form the reduction phase. During this process, a microstructure that is suitable for a highly efficient reaction is formed through volumetric variation in a crystal phase due to an oxidation reduction reaction, leading to generation of a nanometer-sized to micrometer-sized hole suitable for introducing the detection gas, microparticulation due to recrystallization of the reduction phase, formation of the oxygen deficiency concentration portion of the ion conduction phase via the oxidation reduction reaction, and so on.

By employing this microstructure in the chemical sensor according to the present invention, an improvement in reaction selectivity can be achieved by providing different reaction sites as the chemical reaction sites for reduction, decomposition, and so on of the nitrogen oxide in relation to reactions of two or more types of atoms, molecules, or compounds that occur in parallel or in competition simultaneously or within a short time period, and by disposing the reference electrode layer so as to be embedded in the interior of the ion conductive material (solid electrolyte), the unique carrier concentration of the ion conductive material can be referenced directly, thereby improving operational stability. As a result, a dramatic improvement in the sensitivity and efficiency of the sensor can be achieved. In the present invention, the type, form, and so on of the ion conductor, the electrode layer for chemical detection formed on the surface thereof, and the reference electrode layer, which together constitute the chemical sensor, may be designed as desired in accordance with the purpose of use, type, size, and so on of the chemical sensor device, and hence, in the present invention, there are no particular limitations on the specific constitutions thereof.

The following effects are exhibited by the present invention.
(1) A novel chemical sensor employing an electrochemical cell system chemical reaction system can be provided.
(2) A chemical sensor and a chemical detection system having an extremely high response speed and a high-speed, quantitative detection capability, regardless of high or low temperatures and even in the presence of excessive oxygen, which impairs the chemical reaction of the subject substance to be detected, can be constructed and provided.
(3) The chemical detection sensor according to the present invention can be used as a high-performance sensor system by using a single sensor as an electromotive force variation detection sensor and a current value variation (resistance variation) detection sensor respectively or in parallel.
(4) By disposing a plurality of chemical detection electrodes in relation to a single reference electrode, a plurality of types of subject substance to be detected can be measured simultaneously.
(5) By subjecting the chemical detection electrode to electrochemical reduction or oxidation, the microstructure (pore diameter) in the interior of the chemical detection electrode is varied, and thus the chemical detection sensor can be used as a specialized sensitivity-adjustable sensor for use with various subject substances to be detected.
(6) An electrochemical cell system gas sensor capable of detecting a subject substance to be detected with low power consumption, high efficiency, high responsiveness, and at high speed can be provided.
(7) The chemical sensor according to the present invention can be used favorably to detect nitrogen oxide in high-temperature exhaust gas such as automobile exhaust gas.
(8) By embedding the reference electrode in the electrolyte, the sensor structure can be simplified as a single chamber sensor that does not depend on the outside atmosphere, and thus the chemical sensor can be used as a sensor that is incorporated into the interior of an exhaust gas path of an automobile or the like.

### BRIEF DESCRIPTION OF THE DRAWINGS

Fig. 1 shows a constitutional example of a chemical sensor according to the present invention;
Fig. 2 shows measurement results of a sensor characteristic when the chemical sensor is used as an electromotive force variation detection sensor;
Fig. 3 shows measurement results of the sensor characteristic when the chemical sensor is used as a current value variation detection (resistance variation) sensor;
Fig. 4 shows a relationship between a nitrogen oxide concentration and electromotive force variation;
Fig. 5 shows variation in an internal structure due to differences in the electrification conditions of a detection electrode layer;
Fig. 6 shows a constitutional example of a chemical sensor in which a platinum electrode is disposed in the interior of an electrolyte; and
Fig. 7 shows results of simultaneous detection of nitrogen oxide and oxygen by a chemical detection system according to the present invention.

### BEST MODES FOR CARRYING OUT THE INVENTION

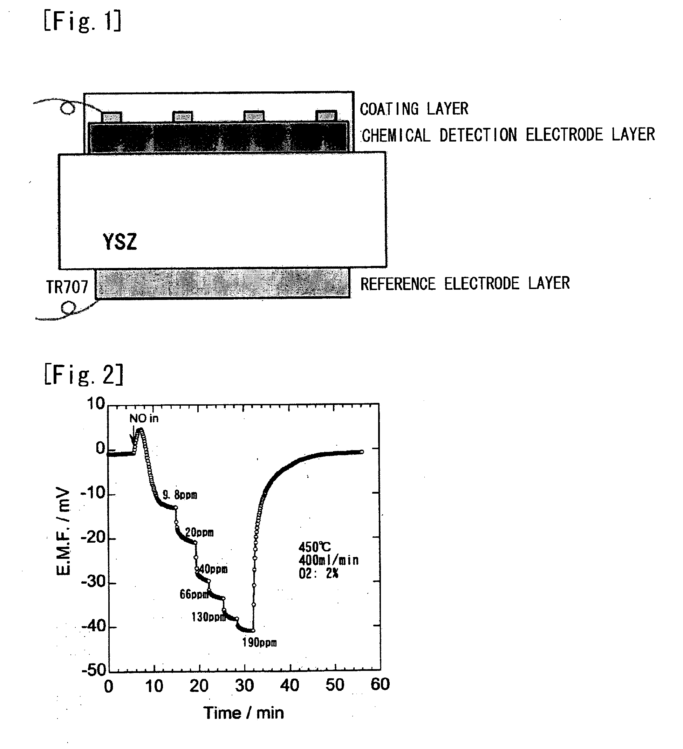

Next, the present invention will be described specifically on the basis of examples. Fig. 1 shows an example of a typical internal structure in a constitutional example of a chemical sensor according to an embodiment of the present invention. Below, a case in which nitrogen oxide is used as a subject substance to be detected will be described in detail.

### Example 1

Zirconia stabilized by finely sintered yttria (to be referred to hereafter as "zirconia") was used as a substrate of an ion conduction phase forming a constitutional base of a chemical detection system, and the zirconia was formed in a disc shape having a diameter of 20mm and a thickness of 0.5mm. A collecting electrode layer was formed from a mixed layer of platinum and zirconia, and a chemical detection electrode layer was formed from a film constituted by a mixture of nickel oxide and zirconia. The mixing ratio was adjusted such that the nickel oxide and zirconia had a molar ratio of 50:50. A mixture of nickel metal and zirconia was screen-printed onto one surface of the ion conduction phase to a surface area of approximately 1.8cm², whereupon heat treatment was performed at 1400°C.

A film constituted by lanthanum strontium manganite and a compound thereof was screen-printed onto the other surface of the ion conduction phase forming the chemical detection electrode layer to a surface area of approximately 1.8cm², whereupon heat treatment was performed at 1200°C, and as a result, a reference electrode layer was formed. A coating layer was formed on the upper portion of the chemical detection electrode layer at a film thickness of approximately 1 micrometer using ultrafine alumina particles by means of screen printing and heat treatment at 1100°C. Fig. 1 shows a constitutional example of the obtained chemical sensor according to the present invention.

Next, a method of measuring a nitrogen oxide detection characteristic produced by the chemical reaction system according to the present invention, formed in the above manner, will be described. A chemical detection system formed by attaching platinum wires to the chemical detection electrode layer and the reference electrode layer as lead wires was disposed in a detection subject gas and connected to a voltmeter or a source meter to measure electromotive force variation occurring when the gas concentration of the nitrogen oxide was varied. As the detection subject gas, a helium-balanced model burned exhaust gas containing 1ppm to 1000ppm of carbon monoxide and 2% oxygen was caused to flow at a flow rate of 400ml/min. The nitrogen oxide concentration of the detection subject gas before and after introduction into the chemical reaction system was measured using a chemiluminescent NOx meter, while the respective nitrogen and oxygen concentrations were measured through gas chromatography.

The sensor characteristic of the chemical detection system was measured under a certain temperature condition between 200 and 800°C. When the chemical detection system was used as an electromotive force variation detection sensor, the amount of electromotive force variation increased together with increases in the nitrogen oxide concentration. Fig. 2 shows measurement results of the sensor characteristic when the chemical detection system is used as an electromotive force variation detection sensor. Nitrogen oxide detection was possible at approximately 200°C, but the response speed tended to increase at a higher temperature.

### Example 2

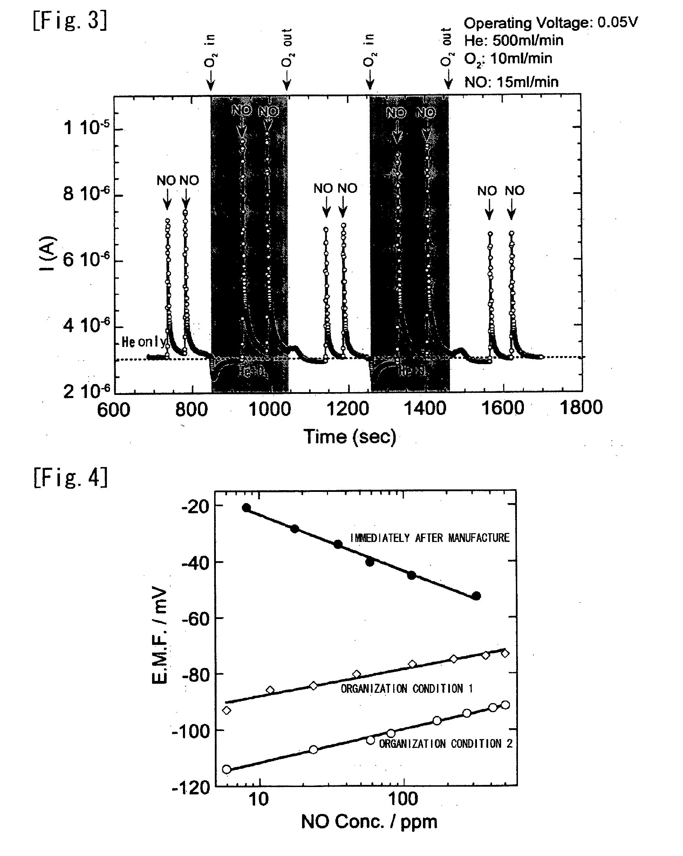

Using a similar chemical detection system to that of the example 1, an investigation into the chemical detection system as a current value variation detection (resistance variation) sensor was conducted by measuring variation in a current value flowing into the chemical detection system during application of a constant voltage. The detection characteristic was measured by observing current value variation in a case where model burned exhaust gases respectively containing 300ppm of carbon monoxide were introduced intermittently, at one second intervals, into an atmosphere in which 100% helium or a helium-balanced gas containing 2% oxygen was flowing at a flow rate of 400ml/min. Under these operating conditions, rapid and dramatic variation in the current value occurred as the nitrogen oxide was introduced, similarly to the electromotive force variation detection sensor. Fig. 3 shows measurement results of the sensor characteristic when the chemical detection system is used as a current value variation (resistance variation) detection sensor. Further, in a current value variation detection sensor, even more dramatic current value variation was observed when the coexistent oxygen concentration was high.

### Example 3

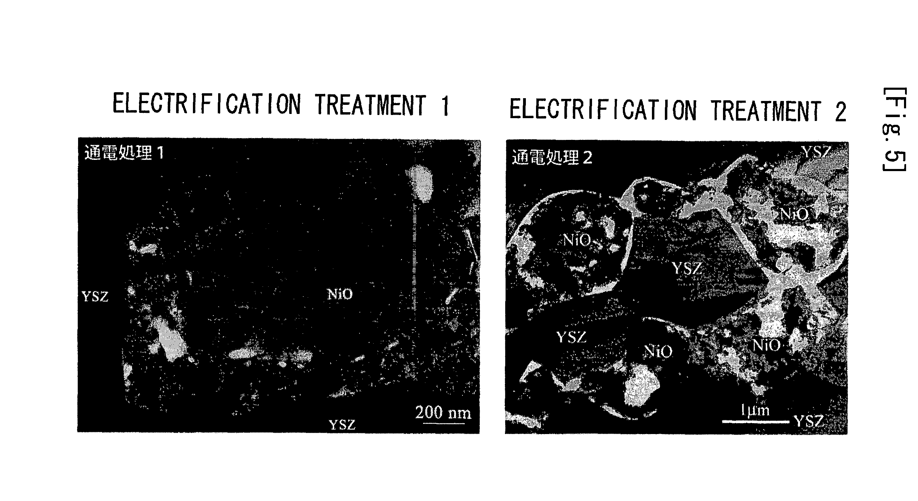

In the chemical detection system of the example 1, electrochemical reduction treatment was implemented on the chemical detection electrode layer, and nitrogen oxide detection while varying the interior microstructure of the layer was measured by measuring electromotive force variation. As a result, it became possible to vary the detection characteristic before and after the reduction reaction and also in accordance with the intensity of the reduction reaction. Fig. 4 shows a relationship between the nitrogen oxide concentration and electromotive force variation when the interior microstructure of the chemical detection electrode layer is varied. An organization condition 1 corresponds to a case in which reduction treatment is performed through electrification for fifteen minutes at 1.75V in an atmosphere of 500°C. An organization condition 2 corresponds to a case in which reduction treatment is performed through electrification for fifteen minutes at 2. 5V in an atmosphere of 500°C. Fig. 5 shows variation in the internal structure of the chemical detection electrode layer due to electrification treatment.

### Example 4

When methane, propane, and pentane were used respectively as the detection subject substance in the chemical detection system of the first example, the most favorable sensor characteristic was exhibited in relation to methane in a chemical detection system in which reduction treatment was implemented on the chemical detection electrode layer under low reduction conditions of 500°C, 1.3V-5mA, 10min, whereas in a chemical detection system in which reduction treatment was implemented under high reduction conditions of 500°C, 2.5V-40mA, 10min, a favorable sensor characteristic was exhibited in relation to pentane. It was concluded from the results of electron microscope observation of the organization that variation in the diameter of the hole formed in the chemical detection electrode layer by the reduction reaction affects the gas sensor characteristic.

### Example 5

Using a similar procedure to that of the example 1, a chemical detection system having a chemical detection electrode layer formed from a material having higher oxygen ion conductivity was manufactured. Ultra-crushing and mixing treatment was implemented in advance on the nickel oxide, bismuth oxide or ceria constituting the chemical detection electrode layer to form an ultrafine particle mixed powder having an average particle diameter of approximately 80nm, serving as a raw material for use in screen printing. The nitrogen oxide detection characteristic of the chemical detection system manufactured in this manner was then tested similarly to the first example. As a result, variation in the detection value was observed at a higher reaction speed and a lower temperature than the first example in a chemical reaction system employing a material having high oxygen ion conductivity.

### Example 6

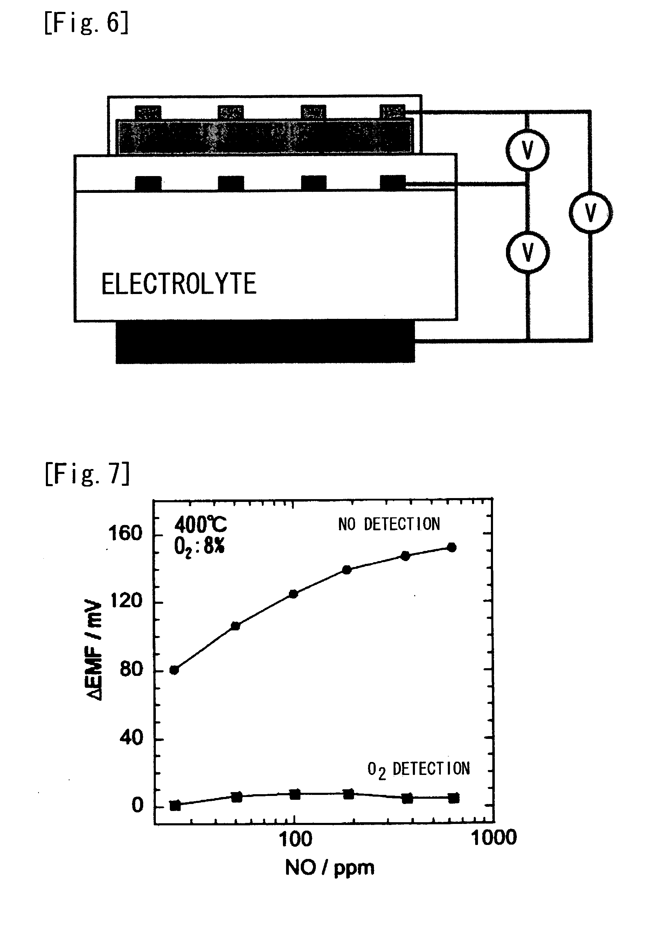

A combined sensor characteristic evaluation relative to nitrogen oxide and oxygen was performed on a sample obtained by disposing platinum and zirconia screen-printed successively in advance and then fired at 1450°C on a lower portion of a detection electrode of the chemical detection system according to the example 1 such that a platinum electrode was embedded in an electrolyte. Fig. 6 shows a constitutional example of a chemical sensor in which a platinum electrode is disposed in the interior of the electrolyte. It was confirmed as a result that nitrogen oxide detection and oxygen concentration detection could be performed at the same time by a single system. Fig. 7 shows the results of simultaneous detection of nitrogen oxide and oxygen. It is assumed that by comparing the respective values of the detected concentrations, more sophisticated concentration detection can be performed. Moreover, a stable response characteristic was exhibited even during a single chamber operation.

### INDUSTRIAL APPLICABILITY

As described in detail above, the present invention relates to an electrochemical cell system gas sensor, and with the present invention, a novel chemical sensor employing an electrochemical reaction cell can be provided. The present invention realizes the construction and provision of a gas sensor that is capable of detecting nitrogen oxide in burned exhaust gas containing oxygen with high sensitivity, at high speed, and quantitatively. The gas sensor according to the present invention has great technical significance since it provides a chemical sensor employing a novel system in which nitrogen oxide can be detected with low power consumption, high-speed responsiveness, and high sensitivity, regardless of high or low temperature conditions and even in the presence of excessive oxygen, which impairs detection of the nitrogen oxide in the exhaust gas.

## Claims

1. An electrochemical system chemical sensor, which detects a subject substance to be detected using an electrochemical reaction system, comprising an ion conduction phase and at least two kinds of electrode facing each other and contacting said ion conduction phase, **characterized in that** the electrode structure comprises at least one chemical detection electrode layer having a selective adsorption characteristic relative to said subject substance to be detected, and at least one reference electrode layer serving as a counter electrode to said chemical detection electrode layer.

2. The chemical sensor according to claim 1, wherein said chemical detection electrode layer is constituted by a mixed conductive substance having both electron conductivity and ion conductivity, or a mixture of an electron conductive substance and an ion conductive substance.

3. The chemical sensor according to claim 1, wherein said reference electrode layer is constituted by a mixed conductive substance having both electron conductivity and ion conductivity, or a mixture of an electron conductive substance and an ion conductive substance.

4. The chemical sensor according to claim 1, wherein said ion conduction phase is constituted by a solid electrolyte having ion conductivity.

5. The chemical sensor according to claim 1, wherein a coating layer having low electron conductivity is provided on a surface of said chemical detection electrode layer.

6. The chemical sensor according to claim 2, wherein an internal electrode structure includes a nanometer-sized or micrometer-sized void, and a part thereof having said selective adsorption characteristic relative to said subject substance to be detected faces said void.

7. The chemical sensor according to claim 6, **characterized in that** said part having said selective adsorption characteristic includes a transition metal element.

8. The chemical sensor according to claim 2, wherein a microstructure for promoting selective detection of said subject substance to be detected is formed in said chemical detection electrode layer by performing reduction or oxidation or both through heat treatment and/or electrification treatment.

9. The chemical sensor according to claim 2, wherein said ion conductor and said electron conductor respectively have a network structure in said electrode interior.

10. The chemical sensor according to claim 2, wherein said reference electrode layer is embedded in said ion conduction phase.

11. An electrochemical system chemical sensor **characterized in** having an equivalent constitution to that of the electrochemical reaction system of the chemical sensor defined in any of claims 1 to 10 as a local interior structure such that instead of having an electrochemical sensor structure as a whole, the electrochemical system chemical sensor has a microstructure that is formed by reduction or oxidation or both in said local structure and has a nanometer-sized or micrometer-sized void enabling selective detection of a subject substance to be detected.

12. A manufacturing method for the chemical sensor having the electrochemical reaction system defined in any of claims 1 to 11, **characterized in** comprising:
constructing an electrochemical reaction system having a structure that includes an ion conduction phase and at least two kinds of electrode facing each other and contacting said ion conduction phase;
forming an electrode layer having as an electrode a mixed conductive substance having both electron conductivity and ion conductivity or a mixture of an electron conductive substance and an ion conductive substance; and
generating a microstructure having a nanometer-sized or micrometer-sized void enabling selective detection of a subject substance to be detected by performing heat treatment and/or electrification treatment on said electrode layer such that reduction, oxidation, or both are performed on said electrode.

13. The manufacturing method for a chemical sensor according to claim 12, wherein said microstructure enabling selective detection of said detection subject substance is generated by applying a material that can be sintered at a low temperature to said electrode instead of a precious metal, whereby the entire manufacturing process can be performed at 1200°C or lower.

14. A detection method for detecting a subject substance to be detected using the chemical sensor defined in any of claims 1 to 12, **characterized in that** a continuous selective detection reaction is generated in the presence of a high concentration (2% or more) of a coexistent substance that impairs selective detection of said detection subject substance.

15. The detection method according to claim 14, wherein said subject substance to be detected is nitrogen oxide or oxygen, and said coexistent substance is oxygen, carbon monoxide, carbon dioxide, water vapor, or hydrocarbon.
